# EUROPEAN PATENT APPLICATION

(11) **EP 4 668 421 A2**
(43) Date of publication of application: **24.12.2025**
(21) Application number: 25175322.4
(22) Date of filing: 09.05.2025
(51) Int. Cl.: H01M 50/103

(54) **SECONDARY BATTERY AND BATTERY MODULE INCLUDING THE SAME**

(30) Priority: 24.05.2024 KR 20240067670; 02.10.2024 KR 20240134346
(71) Applicant: SAMSUNG SDI CO., LTD., Yongin-si, Gyeonggi-do 17084 (KR)
(72) Inventor: SIM, Ha Bin, 16678 Suwon-si, Gyeonggi-do (KR); KIM, Hyo Jin, 16678 Suwon-si, Gyeonggi-do (KR)
(74) Representative: Gulde & Partner

(57) **Abstract**

A secondary battery and a battery module including the same are disclosed. A secondary battery includes an electrode assembly, a case accommodating the electrode assembly, a cap plate coupled to the case, a first insulating member around an outer side surface of the case, and a first open hole passing through the first insulating member and exposing the outer side surface of the case.

## Description

### BACKGROUND

### 1. Field

Aspects of embodiments of the present disclosure relate to a secondary battery and a battery module including the same.

### 2. Description of the Related Art

In general, due to the recent proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions, and an electrolyte solution, and generates energy through oxidation/reduction reactions when lithium ions are intercalated/deintercalated at the positive and negative electrodes.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure, a secondary battery and a battery module including the same capable of securing an insulating property of the secondary battery and strengthening a bonding strength between the secondary battery and a housing are provided.

The above and other aspects and features of the present disclosure will be described in or will be apparent from the following description of some embodiments of the present disclosure.

According to a first aspect of the present disclosure, a secondary battery includes an electrode assembly, a case accommodating the electrode assembly, a cap plate coupled to the case, a first insulating member around (e.g., surrounding) an outer side surface of the case, and a first open hole passing through the first insulating member and exposing the outer side surface of the case. The insulating performance of a secondary battery can be secured by forming an insulating member having an insulating property on the outside of the secondary battery.

The case includes a bottom portion, a rear surface portion extending from the bottom portion, and a side surface portion extending from the bottom portion and intersecting the rear surface portion. An area of the side surface portion may be smaller than an area of the rear surface portion.

The first insulating member may include a bottom insulating portion facing the bottom portion, a rear surface insulating portion facing the rear surface portion, and a side surface insulating portion facing the side surface portion, and the first open hole may include a side surface hole passing through the side surface insulating portion.

A ratio of an area of the side surface hole to the area of the side surface portion may be 0.25 to 0.65.

A shape of the side surface hole may be any of a quadrangular shape, a triangular shape, a rhombus shape, an oval shape, and a zigzag shape.

The side surface hole may include a plurality of unit side surface holes spaced apart from each other on the side surface portion.

The first open hole may further include a bottom hole passing through the bottom insulating portion.

The secondary battery may further include a second insulating member covering an outer side surface of the cap plate. The efficiency of a taping process can be further enhanced by dividing the insulating member surrounding the outside of the secondary battery into a first insulating member and a second insulating member.

A thickness of the second insulating member may be greater than a thickness of the first insulating member.

The thickness of the first insulating member may be 0.2 µm to 9.0 µm, and the thickness of the second insulating member may be 0.2 µm to 10.0 µm.

The secondary battery may further include a wing member extending from the second insulating member and facing the side surface portion.

The wing member may include a pair of wing members symmetrically arranged at opposite sides of the second insulating member.

The wing member may be between the side surface portion and the side surface insulating portion.

The secondary battery may further include an extending insulating portion extending from the first insulating member and facing the cap plate.

The extending insulating portion may be between the second insulating member and the cap plate.

The second insulating member may be between the extending insulating portion and the cap plate.

The secondary battery may further include a second open hole passing through the second insulating member and exposing the outer side surface of the cap plate.

The cap plate may include a vent, and the second open hole may face the vent.

The cap plate may include a vent, and the second insulating member may include a break line facing the vent.

According to a second aspect of the present disclosure, a battery module includes a housing, one or more secondary batteries accommodated in the housing, and an adhesive member between the housing and the secondary battery, wherein the secondary battery includes: an electrode assembly, a case accommodating the electrode assembly, a cap plate coupled to the case, a first insulating member around (e.g., surrounding) an outer side surface of the case, and a first open hole passing through the first insulating member and exposing the outer side surface of the case, and the adhesive member is in contact with the case through the first open hole.

The case includes a bottom portion, a rear surface portion extending from the bottom portion, and a side surface portion extending from the bottom portion and intersecting the rear surface portion.

The bonding strength between a case of the secondary battery and a housing of the battery pack by an adhesive member can be further strengthened by opening a partial region of the insulating member surrounding the outside of the secondary battery.

### BRIEF DESCRIPTION OF THE DRAWINGS

The drawings included with this specification illustrate some embodiments of the present disclosure, and further describe aspects and features of the present disclosure together with the detailed description of the present disclosure. However, the present disclosure is not to be construed as being limited to the drawings.
FIG. 1 is a perspective view schematically illustrating a configuration of a battery module according to an embodiment of the present disclosure;
FIG. 2 is a cross-sectional view taken along the line A-A' in FIG. 1;
FIG. 3 is a perspective view schematically illustrating a configuration of a secondary battery according to an embodiment of the present disclosure;
FIG. 4 is a cross-sectional view taken along the line B-B' in FIG. 3;
FIG. 5 is an exploded perspective view schematically illustrating the configuration of the secondary battery according to an embodiment of the present disclosure;
FIG. 6 is a view schematically illustrating a configuration of an electrode assembly according to an embodiment of the present disclosure;
FIG. 7 is a view schematically illustrating a configuration of a side surface hole according to an embodiment of the present disclosure;
FIGS. 8 to 12 are views illustrating modified examples of the side surface hole shown in FIG. 7;
FIG. 13 is a plan view schematically illustrating a configuration of a second insulating member according to an embodiment of the present disclosure;
FIG. 14 is a cross-sectional view taken along the line C-C' in FIG. 3;
FIGS. 15 to 17 are views schematically illustrating a manufacturing process of the secondary battery according to an embodiment of the present disclosure;
FIG. 18 is a perspective view schematically illustrating a configuration of a secondary battery according to another embodiment of the present disclosure;
FIG. 19 is a cross-sectional view taken along the line D-D' in FIG. 18;
FIGS. 20 to 22 are views schematically illustrating a manufacturing process of the secondary battery of FIG. 18;
FIG. 23 is a perspective view schematically illustrating a configuration of a secondary battery according to another embodiment of the present disclosure;
FIG. 24 is a view illustrating a state in which the secondary battery of FIG. 23 is installed in a housing; and
FIG. 25 is a plan view schematically illustrating a configuration of a second insulating member according to another embodiment of the present disclosure.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the aspects and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

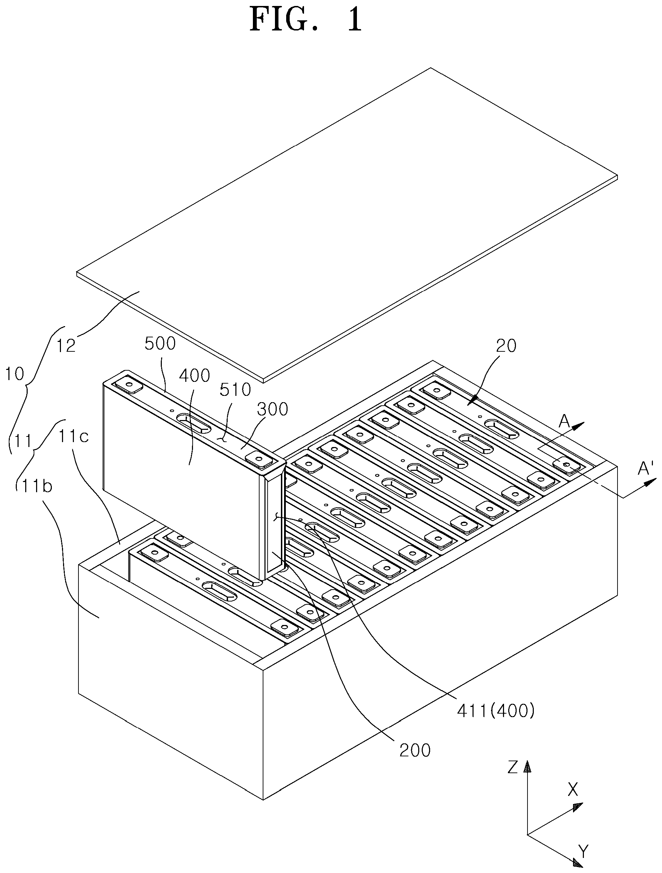

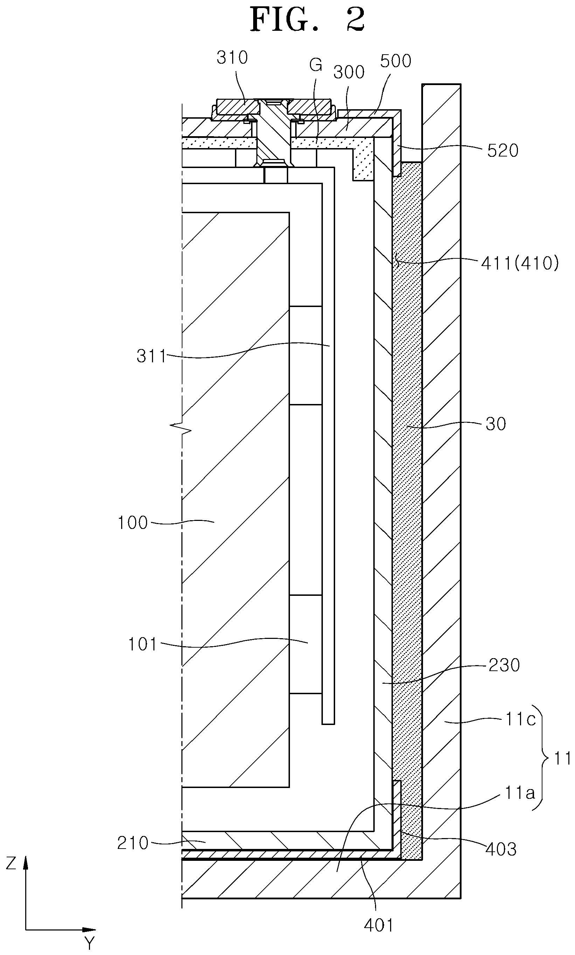

FIG. 1 is a perspective view schematically illustrating a configuration of a battery module according to an embodiment of the present disclosure; and FIG. 2 is a cross-sectional view taken along the line A-A' in FIG. 1.

A first direction to be described below may be a direction parallel to an X-axis based on FIG. 1, a second direction may be a direction parallel to a Y-axis based on FIG. 1, and a third direction may be a direction parallel to a Z-axis based on FIG. 1, for example.

Referring to FIGS. 1 and 2, the battery module according to an embodiment may include a housing 10, a secondary battery 20, and an adhesive member 30.

The housing 10 may function as a configuration which supports the secondary battery 20 and protects the secondary battery 20 from an external impact and foreign substances. The housing 10 may provide a space which accommodates the secondary battery 20 therein.

The housing 10 may include a housing body 11 and a housing cover 12.

The housing body 11 may be formed to have a shape of a box with an empty interior and an open side. For example, the open side of the housing body 11 may be disposed to face upward based on FIG. 1. However, a cross-sectional shape of the housing body 11 is not limited to the quadrangular shape shown in FIG. 1, and may be designed to have any of various shapes, such as a polygonal shape, a circular shape, an oval shape, and the like.

The housing body 11 according to an embodiment may include a bottom plate 11a, an end plate 11b, and a side plate 11c.

The bottom plate 11a may form an exterior of a lower side of the housing body 11.

The bottom plate 11a according to an embodiment may be formed to have a generally flat plate shape. The bottom plate 11a may be disposed perpendicular to the third direction.

The end plate 11b may extend from the bottom plate 11a and may form a portion of an exterior of a side surface of the housing body 11.

The end plate 11b according to an embodiment may have a flat plate shape extending from the bottom plate 11a in a direction parallel to the third direction. A lower end portion of the end plate 11b may be connected to an edge of the bottom plate 11a disposed parallel to the second direction. The end plate 11b may be disposed perpendicular to the first direction. A pair of end plates 11b may be provided. The pair of end plates 11b may be disposed to face each other along the first direction.

The side plate 11c may extend from the bottom plate 11a and form a remaining portion of the exterior of the side surface of the housing body 11.

The side plate 11c according to an embodiment may have a flat plate shape extending from the bottom plate 11a in the direction parallel to the third direction. A lower end portion of the side plate 11c may be connected to an edge of the bottom plate 11a disposed parallel to the first direction. The side plate 11c may be disposed perpendicular to the second direction. A pair of side plates 11c may be provided. The pair of side plates 11c may be disposed to face each other along the second direction.

The housing cover 12 may be coupled to the housing body 11 and close an inner space of the housing body 11. For example, the housing cover 12 may be formed to have a generally plate shape. The housing cover 12 may be disposed to face an upper side surface of the housing body 11, that is, upper end portions of the end plate 11b and the side plate 11c. The housing cover 12 may be fixed to the upper end portions of the end plate 11b and the side plate 11c by any of various types of coupling methods, such as bolting, welding, fitting, and the like.

The secondary battery 20 may function as a unit structure which stores and supplies power in the battery module. The secondary battery 20 may be disposed in the housing 10.

A plurality of secondary batteries 20 may be provided. The plurality of secondary batteries 20 may be arranged in a plurality of rows in the housing 10. For example, the plurality of secondary batteries 20 may be arranged in a plurality of rows along the first direction in the housing body 11. However, an arrangement of the plurality of secondary batteries 20 is not limited thereto, and the plurality of secondary batteries 20 may be arranged in a plurality of rows in the housing body 11 along the second direction, or may be arranged in a plurality of rows along the first and second directions.

The plurality of secondary batteries 20 may be (electrically) connected in series or parallel by an electrical connection unit, such as a bus bar or the like.

Herein, an example in which the secondary battery 20 is a cylindrical battery as a lithium-ion secondary battery will be described. However, the present disclosure is not limited thereto, and the secondary battery 20 may be a lithium polymer battery or prismatic battery, for example.

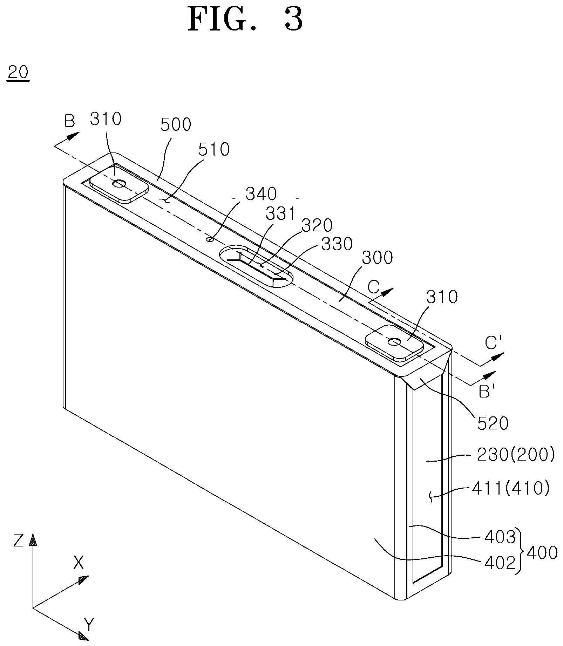

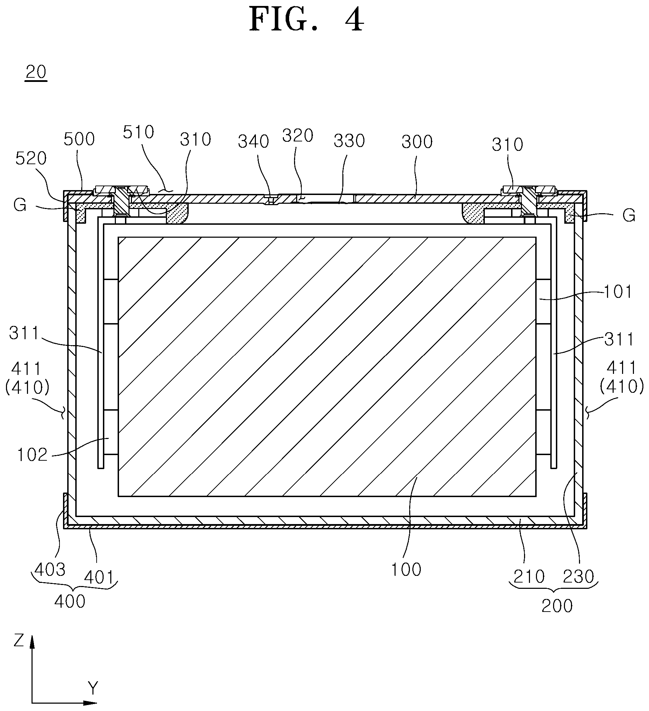

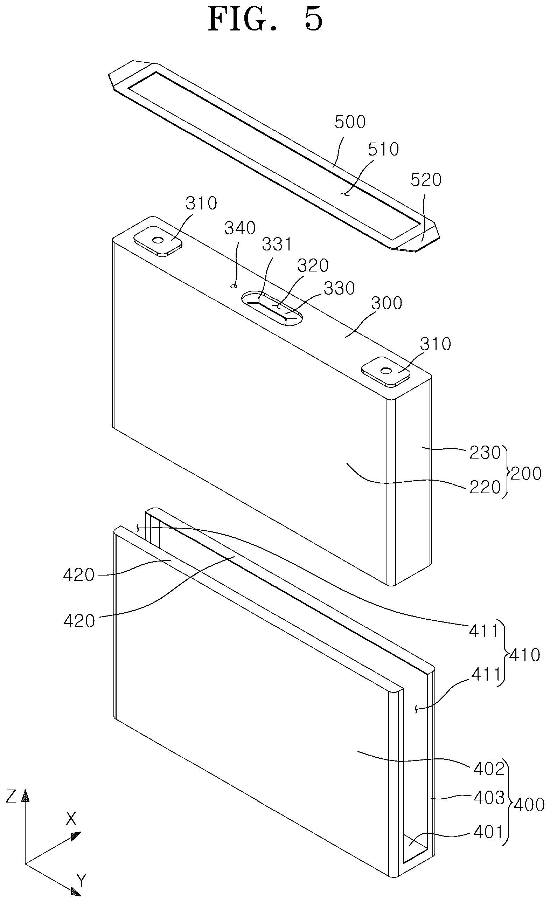

FIG. 3 is a perspective view schematically illustrating a configuration of the secondary battery according to an embodiment of the present disclosure; FIG. 4 is a cross-sectional view taken along the line B-B' in FIG. 3; and FIG. 5 is an exploded perspective view schematically illustrating the configuration of the secondary battery according to an embodiment of the present disclosure.

Referring to FIGS. 1 to 5, the secondary battery 20 according to an embodiment includes an electrode assembly 100, a case 200, a cap plate 300, a first insulating member 400, and a first open hole 410.

The electrode assembly 100 may function as a unit structure which performs charging and discharging operations of power in the secondary battery. The electrode assembly 100 may be accommodated in the case 200.

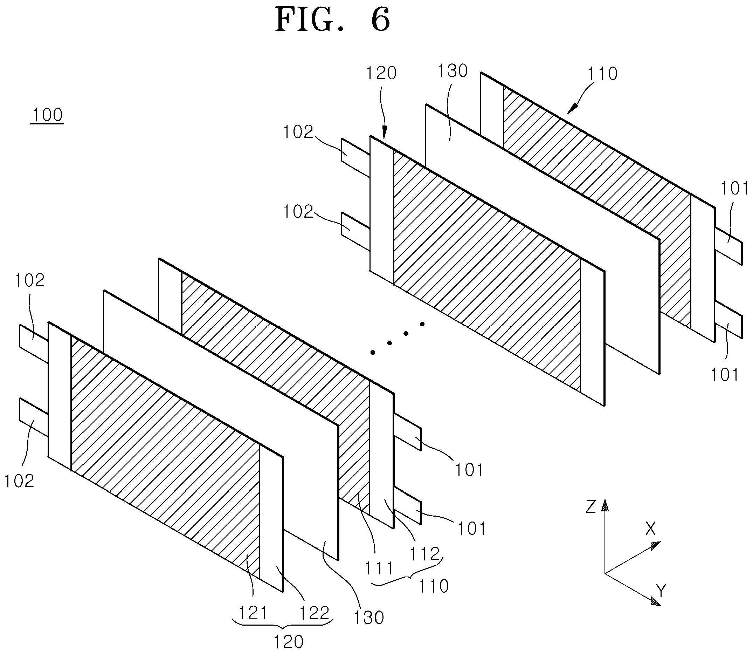

FIG. 6 is a view schematically illustrating a configuration of the electrode assembly according to an embodiment of the present disclosure.

Referring to FIG. 6, the electrode assembly 100 according to the embodiment may include a first electrode 110, a second electrode 120, and a separator 130.

Herein, the electrode assembly 100 will be described using an example in which the electrode assembly 100 is formed as a stack type in which a plurality of first electrodes 110, second electrodes 120, and separators 130 are alternately stacked along the first direction (e.g. the x-axis direction). However, the electrode assembly 100 is not limited thereto, and, in an embodiment, may be formed as a roll type wound around a winding axis in a state in which the first electrode 110, the second electrode 120, and the separator 130 are sequentially stacked.

In an embodiment, the first electrode 110 may function as a positive electrode of the electrode assembly 100.

The first electrode 110 according to an embodiment may be formed to have a foil shape including a metal material, such as aluminum or an aluminum alloy. Both, or opposite, sides of the first electrode 110 may be disposed perpendicular to the first direction. A type, size, shape, or the like of the first electrode 110 is not particularly limited as long as it has conductivity and does not cause a chemical change in the secondary battery. A shape of the first electrode 110 may be designed to have any of various shapes in addition to the rectangular shape.

A plurality of first electrodes 110 may be provided. The plurality of first electrodes 110 may be arranged along the first direction. The number of first electrodes 110 may be designed in various ways depending on the charging capacity and the like of the secondary battery 20.

The first electrode 110 may include a first active material layer 111.

The first active material layer 111 may be provided in a form of being applied on at least a portion of the first electrode 110. The first active material layer 111 may be applied on both, or opposite, surfaces of the first electrode 110, or may be applied on only one surface of the first electrode 110.

In an embodiment, the first electrode 110 functions as a positive electrode, and the first active material layer 111 may include a positive electrode active material.

The positive electrode active material may be a compound capable of capable of reversibly intercalating and deintercalating lithium (a lithiated intercalation compound). In an embodiment, one or more types of a composite oxide of lithium and a metal selected from cobalt, manganese, nickel, iron, and a combination thereof may be used.

For example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, x+y+z=1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM), or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer 111 may further include a positive electrode conductive material.

The positive electrode conductive material imparts conductivity to the first active material layer 111, and any suitable material which does not cause a chemical change and is electronically conductive may be used. Examples of the positive electrode conductive material may include a carbon-based material, such as natural graphite, artificial graphite, carbon black, acetylene black, Ketjen black, carbon fibers, carbon nanofibers, carbon nanotubes, or the like, a metal-based material in the form of metal powder or metal fibers containing copper, nickel, aluminum, silver, or the like, a conductive polymer, such as a polyphenylene derivative or the like, or a mixture thereof.

The first active material layer 111 may further include a positive electrode binder.

The positive electrode binder attaches the particles constituting the positive electrode active material to each other well, and also attaches the positive electrode active material to the first electrode 110 well.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

If the aqueous binder is used as the positive electrode binder, a cellulose-based compound capable of imparting viscosity may be further included. As the cellulose-based compound, one or more types of carboxymethyl cellulose, hydroxypropylmethyl cellulose, methyl cellulose, or alkali metal salts thereof may be used in combination. In an embodiment, Na, K, or Li may be used as the alkali metal.

The dry binder is a polymer material which may be fiberized and may be, for example, polytetrafluoroethylene, polyvinylidene fluoride, a polyvinylidene fluoride-hexafluoropropylene copolymer, polyethylene oxide, or a combination thereof.

The first electrode 110 may include a first uncoated portion 112 on which the first active material layer 111 is not applied. The first uncoated portion 112 according to an embodiment may be disposed in an end region of the first electrode 110 facing the second direction. However, a form of the first uncoated portion 112 is not limited thereto, and, in an embodiment, the first uncoated portion 112 may be formed over an entire edge region of the first electrode 110.

In an embodiment, the second electrode 120 may function as a negative electrode of the electrode assembly 100.

The second electrode 120 according to an embodiment may be formed to have a foil shape including a metal material, such as copper, a copper alloy, nickel, or a nickel alloy. Both, or opposite, surfaces of the second electrode 120 may be disposed perpendicular to the first direction. A type, size, shape or the like of the second electrode 120 is not particularly limited as long as it has conductivity and does not cause a chemical change in the secondary battery. A cross-sectional shape of the second electrode 120 may be designed to have any of various shapes in addition to the rectangular shape shown in FIG. 4.

A plurality of second electrodes 120 may be provided. The plurality of second electrodes 120 may be arranged along the first direction. The plurality of first electrodes 110 and the second electrodes 120 may be alternately disposed along the first direction.

The second electrode 120 may include a second active material layer 121 and a second uncoated portion 122.

The second active material layer 121 may be provided in a form of being applied on at least a portion of the second electrode 120. The second active material layer 121 may be applied on both, or opposite, surfaces of the second electrode 120, or may be applied on only one surface of the second electrode 120.

In an embodiment, the second electrode 120 functions as a negative electrode, and the second active material layer 121 may include a negative electrode active material.

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating and deintercalating lithium ions may include a carbon-based negative electrode active material, for example, crystalline carbon, amorphous carbon, or a combination thereof. An example of crystalline carbon may be graphite, such as amorphous, plate-shaped, flaky, spherical, or fibrous natural graphite or artificial graphite, and an example of amorphous carbon may be soft carbon or hard carbon, mesophase pitch carbide, calcined coke, or the like.

An alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

An Si-based negative electrode active material or Sn-based negative electrode active material may be used as the material capable of doping and dedoping lithium. The Si-based negative electrode active material may be silicon, a silicon-carbon composite, SiOₓ (0 < x ≤ 2), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, an Sn-based alloy, or a combination thereof.

The silicon-carbon composite may be a composite of silicon and amorphous carbon. According to an embodiment, the silicon-carbon composite may be in the form of silicon particles whose surfaces are coated with amorphous carbon. For example, the silicon-carbon composite may include a secondary particle (a core) in which silicon primary particles are assembled, and an amorphous carbon coating layer (a shell) located on the surface of the secondary particle. The amorphous carbon may be located between the silicon primary particles, and, for example, the silicon primary particles may be coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer located on the surface of the core.

The Si-based negative electrode active material or the Sn-based negative electrode active material may be used in combination with the carbon-based negative electrode active material.

The second active material layer 121 may further include a negative electrode conductive material and a negative electrode binder.

The negative electrode conductive material imparts conductivity to the second active material layer 121, and any suitable material which does not cause a chemical change and is electronically conductive may be used. Examples of the negative electrode conductive material may include a carbon-based material, such as natural graphite, artificial graphite, carbon black, acetylene black, Ketjen black, carbon fibers, carbon nanofibers, carbon nanotubes, or the like, a metal-based material in the form of metal powder or metal fibers containing copper, nickel, aluminum, silver, or the like, a conductive polymer, such as a polyphenylene derivative or the like, or a mixture thereof.

The negative electrode binder attaches the particles constituting the negative electrode active material to each other well, and also attaches the negative electrode active material to the second electrode 120 well.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

If the aqueous binder is used as the negative electrode binder, a cellulose-based compound capable of imparting viscosity may be further included. As the cellulose-based compound, one or more types of carboxymethyl cellulose, hydroxypropylmethyl cellulose, methyl cellulose, and alkali metal salts thereof may be used in combination. In an embodiment, Na, K, or Li may be used as the alkali metal.

The dry binder is a polymer material which may be fiberized and may be, for example, polytetrafluoroethylene, polyvinylidene fluoride, a polyvinylidene fluoride-hexafluoropropylene copolymer, polyethylene oxide, or a combination thereof.

The second electrode 120 may include a second uncoated portion 122 on which the second active material layer 121 is not applied. The second uncoated portion 122 according to an embodiment may be disposed in an end region of the second electrode 120. However, a form of the second uncoated portion 122 is not limited thereto, and, in an embodiment, the second uncoated portion 122 may be formed over an entire edge region of the second electrode 120.

The separator 130 may be disposed between the first electrode 110 and the second electrode 120. The separator 130 may prevent or substantially prevent a short circuit between the first electrode 110 and the second electrode 120 while allowing lithium ions to move between the first electrode 110 and the second electrode 120. In an embodiment, the separator 130 may be disposed to entirely surround a surface region of the electrode assembly 100. Accordingly, the separator 130 may prevent or substantially prevent the first electrode 110 and the second electrode 120 from being directly exposed to the outside of the electrode assembly 100.

As the separator 130, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may be used.

The separator 130 may include a porous substrate and a coating layer containing an organic material, an inorganic material, or a combination thereof located on one surface or both, or opposite, surfaces of the porous substrate.

The porous substrate may be a polymer film formed of one polymer selected from polyolefins, such as polyethylene and polypropylene, polyesters, such as polyethylene terephthalate and polybutylene terephthalate, polyacetal, polyamide, polyimide, polycarbonate, polyether ketone, polyaryletherketone, polyetherimide, polyamideimide, polybenzimidazole, polyether sulfone, polyphenylene oxide, a cyclic olefin copolymer, polyphenylene sulfide, polyethylene naphthalate, glass fibers, and polytetrafluoroethylene (e.g., Teflon), or a copolymer or mixture of two or more thereof.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in one coating layer, or present in a form in which a coating layer containing an organic material and a coating layer containing an inorganic material are stacked.

The electrode assembly 100 according to an embodiment may further include a first tab 101 and a second tab 102.

The first tab 101 may be connected to the first electrode 110.

The first tab 101 according to an embodiment may have a foil shape extending from the first uncoated portion 112 of the first electrode 110 in a direction parallel to the second direction. In an embodiment, the first tab 101 may have a substantially rectangular shape. However, the shape of the first tab 101 is not limited thereto, and may have any of various shapes.

In an embodiment, the first tab 101 may be formed integrally with the first electrode 110. For example, the first tab 101 may be a remaining region of the first uncoated portion 112 which remains after a partial region of the first uncoated portion 112 is cut or removed by notching processing or the like. In an embodiment, the first tab 101 may be manufactured separately from the first electrode 110 and then connected to the first uncoated portion 112 by welding or the like. In an embodiment, a material of the first tab 101 may be the same as a material of the first electrode 110.

A plurality of first tabs 101 may be provided. Each of the first tabs 101 may individually extend from the first uncoated portions 112 of different first electrodes 110. Neighboring first tabs 101 may be disposed to face each other along the first direction. That is, the plurality of first tabs 101 may be arranged along the first direction. The neighboring first tabs 101 may be disposed parallel to each other. The neighboring first tabs 101 may be in contact with each other and may be spaced apart from each other by a thickness of the separator 130.

A plurality of first tabs 101 may be provided on each first electrode 110. For example, a pair of first tabs 101 may be formed on each first electrode 110. The pair of first tabs 101 formed on each first electrode 110 may be arranged along the third direction.

The second tab 102 may be connected to the second electrode 120.

The second tab 102 according to an embodiment may have a foil shape extending from the second uncoated portion 122 of the second electrode 120 in the direction parallel to the second direction. In an embodiment, extending directions of the first tab 101 and the second tab 102 may be opposite to each other. In an embodiment, the second tab 102 may have a substantially rectangular shape. However, the shape of the second tab 102 is not limited thereto, and may have any of various shapes.

In an embodiment, the second tab 102 may be formed integrally with the second electrode 120. For example, the second tab 102 may be a remaining region of the second uncoated portion 122 which remains after a partial region of the second uncoated portion 122 is cut or removed by notching processing or the like. In an embodiment, the second tab 102 may be manufactured separately from the second electrode 120 and then connected to the second uncoated portion 122 by welding or the like. In an embodiment, a material of the second tab 102 may be the same as a material of the second electrode 120.

A plurality of second tabs 102 may be provided. Each of the second tabs 102 may individually extend from the second uncoated portions 122 of different second electrodes 120. Neighboring second tabs 102 may be disposed to face each other along the first direction. That is, the plurality of second tabs 102 may be arranged along the first direction. The neighboring second tabs 102 may be disposed parallel to each other. The neighboring second tabs 102 may be in contact with each other and may also be spaced apart from each other by the thickness of the separator 130.

In an embodiment, a plurality of second tabs 102 may be provided on each second electrode 120. For example, a pair of second tabs 102 may be formed on each second electrode 120. The pair of second tabs 102 formed on each second electrode 120 may be arranged along the third direction.

The case 200 may form generally an exterior of the secondary battery 20 and may accommodate the electrode assembly 100. In an embodiment, the case 200 may include a conductive metal material, such as aluminum, an aluminum alloy, or nickel-plated steel.

The case 200 according to an embodiment may include a bottom portion 210, a rear surface portion 220, and a side surface portion 230.

The bottom portion 210 may form an exterior of a lower side of the case 200. The bottom portion 210 according to an embodiment may have a rectangular plate shape. The bottom portion 210 may be disposed to face the bottom plate 11a of the housing body 11. The bottom portion 210 may be disposed to face the bottom plate 11a along the third direction.

The rear surface portion 220 may extend from the bottom portion 210 and may form a portion of the exterior of a side surface of the case 200.

The rear surface portion 220 according to an embodiment may have a rectangular plate shape extending from the bottom portion 210 in the direction parallel to the third direction. A lower end portion of the rear surface portion 220 may be connected to an edge of the bottom portion 210 disposed parallel to the second direction. The rear surface portion 220 may be disposed perpendicular to the first direction. An end portion of the rear surface portion 220 may be disposed to face the housing cover 12.

A pair of rear surface portions 220 may be provided. The pair of rear surface portions 220 may be disposed to be spaced apart at a certain interval and face each other along the first direction. The pair of rear surface portions 220 may be disposed in parallel. Each of the rear surface portions 220 may be disposed to face inner side surfaces of different end plates 11b in the housing body 11.

The side surface portion 230 may extend from the bottom portion 210 and may form a remaining portion of an exterior of the side surface of the case 200.

The side surface portion 230 according to an embodiment may have a rectangular plate shape extending from the bottom portion 210 in the direction parallel to the third direction. A lower end portion of the side surface portion 230 may be connected to an edge of the bottom portion 210 disposed parallel to the first direction. The side surface portion 230 may be disposed to intersect the rear surface portion 220. For example, the side surface portion 230 may be disposed perpendicular to the second direction. An end portion of the side surface portion 230 may be disposed to face the housing cover 12. An area of the side surface portion 230 may be smaller than an area of the rear surface portion 220.

A pair of side surface portions 230 may be provided. The pair of side surface portions 230 may be disposed to be spaced apart and face each other at a certain interval along the second direction. The pair of side surface portions 230 may be disposed in parallel. Each of the side surface portions 230 may be disposed to face inner side surfaces of different side plates 11c in the housing body 11.

Accordingly, the case 200 according to an embodiment may have a rectangular parallelepiped shape having an open upper end portion facing the housing cover 12.

The cap plate 300 may be coupled to the case 200 and may seal the case 200.

The cap plate 300 according to an embodiment may be formed to have a flat plate shape. The cap plate 300 may be disposed to face the case 200 along the third direction. For example, the cap plate 300 may be disposed to face the open upper side surface of the case 200. The cap plate 300 may be disposed parallel to the bottom portion 210 of the case 200.

In an embodiment, the cap plate 300 may be seated on upper end portions of the rear surface portion 220 and the side surface portion 230. In an embodiment, the cap plate 300 may be inserted into the case 200, and a peripheral surface may be in contact with inner side surfaces of the rear surface portion 220 and the side surface portion 230. The cap plate 300 may be coupled to the upper end portions of the rear surface portion 220 and the side surface portion 230 by any of various types of coupling methods, such as welding, bolting, fitting, and the like.

The cap plate 300 may include a terminal 310 electrically connected to the electrode assembly 100.

The terminal 310 may pass through the cap plate 300 along the third direction. An upper end portion of the terminal 310 may protrude outward from the cap plate 300, and a lower end portion of the terminal 310 may protrude into the case 200. A specific shape of the terminal 310 is not limited to the shape shown in FIGS. 1 to 6, and may have any of various shapes.

The terminal 310 may be formed of an electrically conductive material, such as aluminum, nickel, copper, or the like.

A pair of terminals 310 may be provided. The pair of terminals 310 may be disposed to be spaced apart from each other at a certain interval on the cap plate 300 along the second direction.

The terminal 310 may be electrically connected by a current collector 311. The pair of terminals 310 may be individually connected to the first electrode 110 and the second electrode 120 of the electrode assembly 100. Accordingly, the pair of terminals 310 may respectively function as a positive electrode terminal and a negative electrode terminal of the secondary battery 20.

For example, one terminal 310 among the pair of terminals 310 may be connected to the current collector 311 joined to the first tab 101, and the other terminal 310 among the pair of terminals 310 may be connected to the current collector 311 joined to the second tab 102. However, the present disclosure is not limited thereto, and, in an embodiment, the pair of terminals 310 may be directly connected to the first tab 101 and the second tab 102.

In an embodiment, an insulator G may be installed between the electrode assembly 100 and the cap plate 300. A pair of insulators G may be provided. The pair of insulators G may be spaced apart from each other between the electrode assembly 100 and the cap plate 300 along the second direction. In an embodiment, the pair of insulators G may be disposed to individually surround different terminals 310. The insulators G may be formed of an insulating material, such as polyethylene (PE), polypropylene (PP), polyethylene terephthalate (PET), rubber, or the like.

The cap plate 300 may further include a vent hole 320 and a vent plate 330.

The vent hole 320 may be formed to have a hole shape passing through the cap plate 300 along the third direction. The vent hole 320 may provide a path through which flames, gas, smoke, or the like formed in the cell case 200 is discharged from the secondary battery 20 if thermal runaway of the secondary battery 20 occurs. A lower side of the vent hole 320 may be connected to an inner space of the cell case 200. An upper side of the vent hole 320 may be connected to a space outside the cap plate 300. A cross-sectional shape of the vent hole 320 may have any of various shapes, such as an oval shape, a circular shape, a polygonal shape, and the like.

The vent plate 330 may be opened and closed in response to a change in internal pressure of the cell case 200. That is, the vent plate 330 may maintain a closed state during normal operation of the secondary battery 20 to seal the cell case 200. The vent plate 330 may be opened as the internal pressure of the cell case 200 rises more than a certain magnitude (e.g., a set magnitude) due to overcharging of the secondary battery 20, the occurrence of fire, or the like, and may discharge flames, gas, smoke, and the like generated inside the cell case 200 to the outside of the cell case 200.

The vent plate 330 according to an embodiment may be formed to have a flat plate shape. The vent plate 330 may be disposed to face the vent hole 320 along the third direction. In an embodiment, a thickness of the vent plate 330 may be smaller than a thickness of the cap plate 300. An area of the vent plate 330 may be formed to be larger than a cross-sectional area of the vent hole 320. An upper surface of the vent plate 330 may be coupled to a lower surface of the cap plate 300 by any of various types of coupling methods, such as welding, bolting, fitting, and the like. In an embodiment, the vent plate 330 may be inserted into the vent hole 320, and a peripheral surface of the vent plate 330 may be coupled to an inner side surface of the vent hole 320.

In an embodiment, a vent notch 331 for inducing a rupture operation of the vent plate 330 may be formed in the vent plate 330. The vent notch 331 according to an embodiment may have a groove shape concavely recessed to the inside of the vent plate 330 from an outer side surface of the vent plate 330. However, a shape of the vent notch 331 is not limited to the shape shown in FIG. 3, and may be formed to have any of various patterns on the vent plate 330.

The cap plate 300 may further include an electrolyte inlet 340 in which a sealing stopper may be installed.

The first insulating member 400 may be disposed around (e.g., to surround) an outer side surface of the case 200. The first insulating member 400 may insulate the case 200. In an embodiment, the first insulating member 400 may include an insulating material including at least one among polyethylene (PE), polypropylene (PP), polystyrene (PS), polyvinyl chloride (PVC), polyethylene terephthalate (PET), acrylonitrile butadiene styrene (ABS), polyamide (PA), polycarbonate (PC), high-density polyethylene (HDPE), low-density polyethylene (LDPE), and polymethyl methacrylate (PMMA).

The first insulating member 400 according to an embodiment may include a bottom insulating portion 401, a rear surface insulating portion 402, and a side surface insulating portion 403.

The bottom insulating portion 401 may form an exterior of a lower side of the first insulating member 400.

The bottom insulating portion 401 according to an embodiment may have a rectangular plate shape. An inner side surface of the bottom insulating portion 401 may be disposed to face the bottom portion 210 of the case 200 along the third direction. In an embodiment, a shape and an area of the bottom insulating portion 401 may be the same as a shape and an area of the bottom portion 210. The inner side surface of the bottom insulating portion 401 may be attached to the outer side surface of the bottom portion 210 by an adhesive or the like. The outer side surface of the bottom insulating portion 401 may be disposed to face the bottom plate 11a of the housing body 11.

The rear surface insulating portion 402 may extend from the bottom insulating portion 401 and may form a portion of the exterior of a side surface of the first insulating member 400.

The rear surface insulating portion 402 according to an embodiment may extend from the bottom insulating portion 401 in the direction parallel to the third direction. A lower end portion of the rear surface insulating portion 402 may be connected to an edge of the bottom insulating portion 401 disposed parallel to the second direction. The rear surface insulating portion 402 may be disposed perpendicular to the first direction.

An inner side surface of the rear surface insulating portion 402 may be disposed to face the rear surface portion 220 of the case 200 along the first direction. In an embodiment, a shape and an area of the rear surface insulating portion 402 may be the same as a shape and an area of the rear surface portion 220. The inner side surface of the rear surface insulating portion 402 may be attached to an outer side surface of the rear surface portion 220 by an adhesive or the like, or may be pressed or airtightly fixed to the rear surface portion 220 by an elasticity of the first insulating member 400. The outer side surface of the rear surface insulating portion 402 may be disposed to face the end plate 11b of the housing body 11.

A pair of rear surface insulating portions 402 may be provided. The pair of rear surface insulating portions 402 may be disposed to be spaced apart at a certain interval and face each other along the first direction. The pair of rear surface insulating portions 402 may be disposed parallel to each other. Each of the rear surface insulating portions 402 may be disposed to individually face a different rear surface portion 220.

The side surface insulating portion 403 may extend from the bottom insulating portion 401 and may form a remaining portion of the exterior of the side surface of the first insulating member 400.

The side surface insulating portion 403 according to an embodiment may extend from the bottom insulating portion 401 in the direction parallel to the third direction. A lower end portion of the side surface insulating portion 403 may be connected to an edge of the bottom insulating portion 401 disposed parallel to the first direction. The side surface insulating portion 403 may be disposed perpendicular to the second direction.

An inner side surface of the side surface insulating portion 403 may be disposed to face the side surface portion 230 of the case 200 along the second direction. The inner side surface of the side surface insulating portion 403 may be attached to the outer side surface of the side surface portion 230 by an adhesive or the like, or may be pressed or airtightly fixed to the side surface portion 230 by the elasticity of the first insulating member 400. The outer side surface of the side surface insulating portion 403 may be disposed to face the side plate 11c of the housing body 11.

A pair of side surface insulating portions 403 may be provided. The pair of side surface insulating portions 403 may be disposed to be spaced apart at a certain interval and face each other along the second direction. The pair of side surface insulating portions 403 may be disposed parallel to each other. Each of the side surface insulating portions 403 may be disposed to individually face a different side surface portion 230.

The first open hole 410 may pass through the first insulating member 400 and expose the outer side surface of the case 200. The first open hole 410 may open a portion of the first insulating member 400 to allow direct bonding of the case 200 and the adhesive member 30 to be described below.

The first open hole 410 according to an embodiment may include a side surface hole 411.

The side surface hole 411 may pass through the side surface insulating portion 403 and expose the side surface portion 230 of the case 200.

In an embodiment, a ratio of an area of the side surface hole 411 to the area of the side surface portion 230 may be 0.25 to 0.65. In other words, the area of the side surface hole 411 is 25 % to 65% of the area of the side surface portion 230. Here, the area of the side surface hole 411 may be an area of a portion directly exposed to the outside of the secondary battery 20 among an entire area of the side surface hole 411. That is, when a portion of the side surface hole 411 is covered by a separate configuration or the like, the area of the side surface hole 411 may mean an area of a portion of the side surface hole 411 excluding the covered portion of the side surface hole 411. If the portion of the side surface hole 411 is not covered by the separate configuration or the like, the area of the side surface hole 411 may be the entire area of the side surface hole 411 passing through the side surface insulating portion 403.

If the ratio of the area of the side surface hole 411 to the area of the side surface portion 230 is less than 0.25, the bonding strength between the side surface portion 230 and the adhesive member 30 may not be sufficiently secured through the side surface hole 411.

If the ratio of the area of the side surface hole 411 to the area of the side surface portion 230 is greater than 0.65, there may be a problem in that the insulating performance of the first insulating member 400 excessively deteriorates.

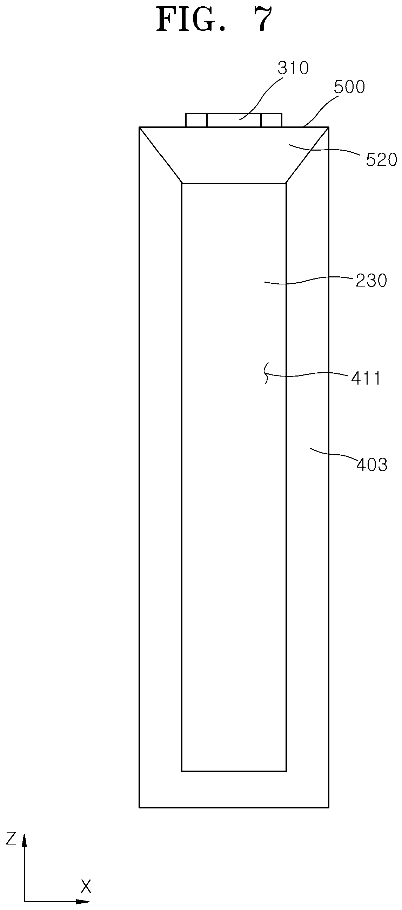

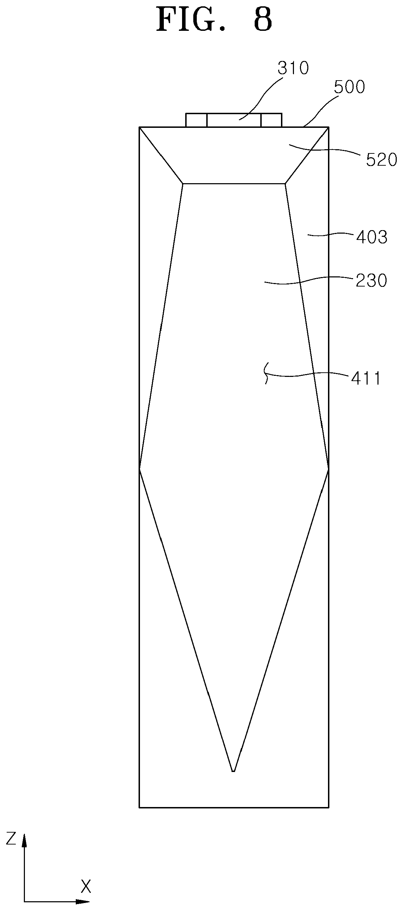

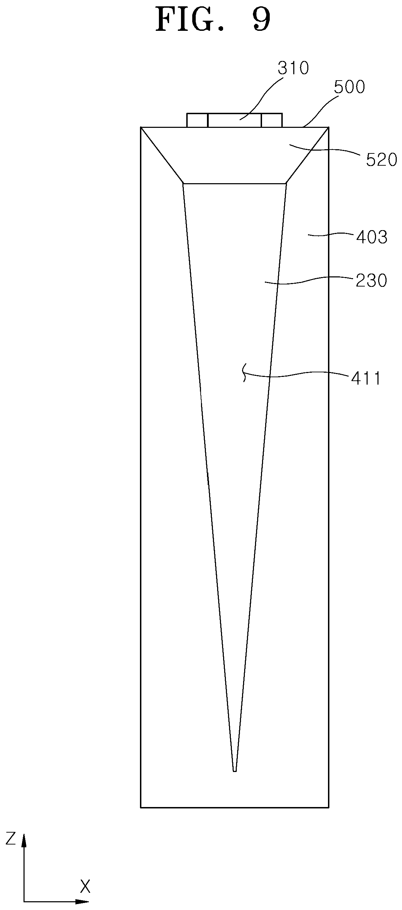

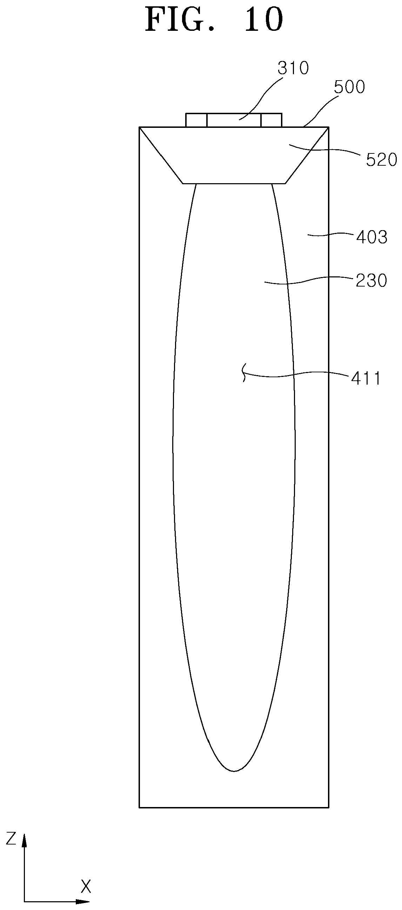

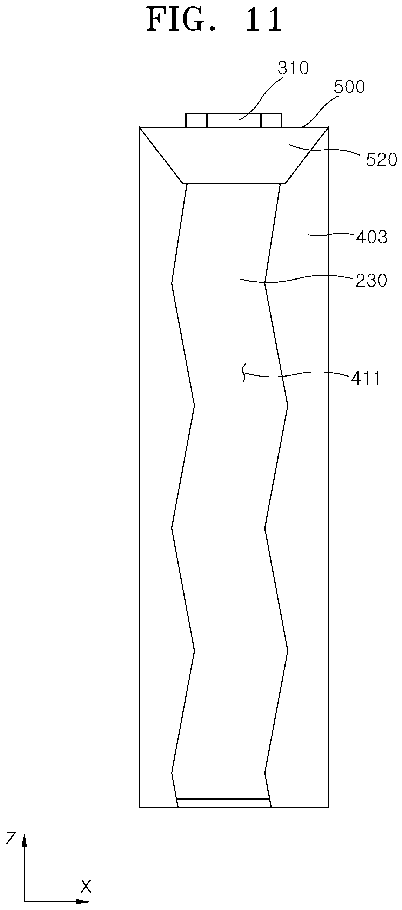

FIG. 7 is a view schematically illustrating a configuration of the side surface hole according to an embodiment of the present disclosure; and FIGS. 8 to 12 are views illustrating modified examples of the side surface hole shown in FIG. 7.

Referring to FIG. 7, the side surface hole 411 according to the embodiment may have a hole shape passing through the side surface insulating portion 403 along the second direction. In an embodiment, the shape of the side surface hole 411 may be a rectangular shape. An upper end portion of the side surface hole 411 may completely pass through an upper end portion of the side surface insulating portion 403. However, the side surface hole 411 is not limited thereto, and the upper end portion of the side surface hole 411 may be located in an inner region of the side surface insulating portion 403.

Referring to FIGS. 8 to 11, the shape of the side surface hole 411 may be any of a triangular shape, a rhombus shape, an oval shape, and a zigzag shape. However, a shape of the side surface hole 411 is not limited thereto, and may be any of various shapes, such as a circular shape, an irregular shape, and the like.

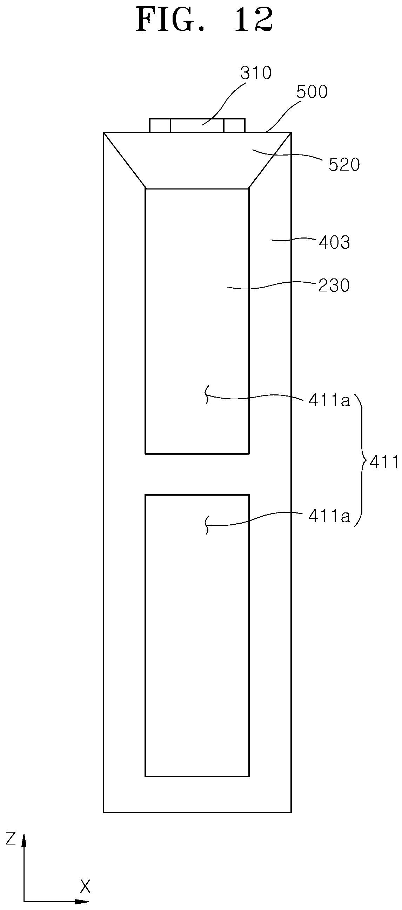

Referring to FIG. 12, the side surface hole 411 may include a plurality of unit side surface holes 411a.

The plurality of unit side surface holes 411a may be unit structures each forming a portion of the exterior of the side surface holes 411. The plurality of unit side surface holes 411a may be disposed to be spaced apart from each other on the side surface portion 230. For example, as shown in FIG. 12, a pair of unit side surface holes 411a may be formed, and may be disposed to be spaced apart from each other at a certain interval along the third direction. However, a number, arrangement, and the like of the plurality of unit side surface holes 411a are not limited thereto, and may have various types of number and arrangement.

The shapes and areas of the plurality of unit side surface holes 411a may all be the same, or the shapes and areas of each unit side surface hole 411a may be different. The area of the above-described side surface hole 411 may be equal to the sum of the areas of each unit side surface hole 411a minus an area of a portion of the secondary battery 20 not directly exposed to the outside.

The secondary battery 20 according to an embodiment may further include an extending insulating portion 420.

The extending insulating portion 420 may extend from the first insulating member 400 and may be disposed to face the cap plate 300. In an embodiment, the extending insulating portion 420 may be formed of a same material as the first insulating member 400.

The extending insulating portion 420 according to an embodiment may extend from an upper end portion of the rear surface insulating portion 402 in the direction parallel to the first direction. The extending insulating portion 420 may be disposed to face the cap plate 300 along the third direction. An extending length of the extending insulating portion 420 may have various lengths within a range of not being brought in direct contact with the terminal 310. In an embodiment, an inner side surface of the extending insulating portion 420 may be in contact with an outer side surface of the cap plate 300. The inner side surface of the extending insulating portion 420 may be attached to the outer side surface of the cap plate 300 by an adhesive or the like.

In an embodiment, the extending insulating portion 420 may be integrally formed with the rear surface insulating portion 402, or may be connected to the rear surface insulating portion 402 after being manufactured separately from the rear surface insulating portion 402.

In an embodiment, a pair of extending insulating portions 420 may be provided. The pair of extending insulating portions 420 may be individually connected to different rear surface insulating portions 402, respectively. The pair of extending insulating portions 420 may be disposed to be spaced apart at a certain interval and face each other along the first direction.

The secondary battery 20 according to an embodiment may further include a second insulating member 500.

The second insulating member 500 may be disposed to cover the outer side surface of the cap plate 300. The second insulating member 500 may insulate the cap plate 300.

In an embodiment, the second insulating member 500 may include an insulating material including at least one among polyethylene (PE), polypropylene (PP), polystyrene (PS), polyvinyl chloride (PVC), polyethylene terephthalate (PET), acrylonitrile butadiene styrene (ABS), polyamide (PA), polycarbonate (PC), high-density polyethylene (HDPE), low-density polyethylene (LDPE), and polymethyl methacrylate (PMMA). The insulating material included in the first insulating member 400 and the insulating material included in the second insulating member 500 may be the same, or may be different.

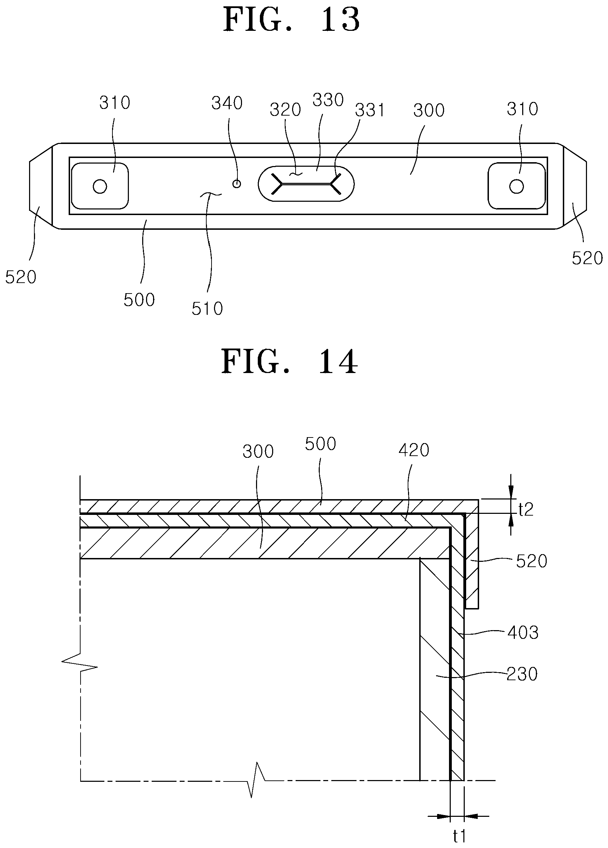

FIG. 13 is a plan view schematically illustrating a configuration of the second insulating member according to an embodiment of the present disclosure; and FIG. 14 is a cross-sectional view taken along the line C-C' in FIG. 3.

Referring to FIGS. 13 and 14, the second insulating member 500 according to an embodiment may be disposed to face the cap plate 300 along the third direction. The second insulating member 500 may be disposed parallel to the cap plate 300. An inner side surface of the second insulating member 500 may be seated on the outer side surface of the cap plate 300. As the pair of extending insulating portions 420 are disposed to cover an edge region of the cap plate 300, an edge of the inner side surface of the second insulating member 500 may be seated on the extending insulating portions 420. That is, in an embodiment, the extending insulating portions 420 may be disposed between the second insulating member 500 and the cap plate 300. The inner side surface of the second insulating member 500 may be attached to the cap plate 300 and the extending insulating portion 420 by an adhesive or the like.

In an embodiment, a thickness t1 of the first insulating member 400 may be 0.2 µm to 9.0 µm, and a thickness t2 of the second insulating member 500 may be 0.2 µm to 10.0 µm. In an embodiment, the thickness t2 of the second insulating member 500 may be greater than the thickness t1 of the first insulating member 400.

The secondary battery 20 according to the embodiment may further include a second open hole 510.

The second open hole 510 may pass through the second insulating member 500 and expose the outer side surface of the cap plate 300.

The second open hole 510 according to an embodiment may have a hole shape passing through the second insulating member 500 along the third direction. The second open hole 510 may be disposed to face the vent plate 330. Accordingly, the second open hole 510 may prevent or substantially prevent the second insulating member 500 from being separated from the cap plate 300 by flames, gas, or the like discharged from the vent plate 330 if the vent plate 330 is opened. An area of the second open hole 510 may be designed in various ways within a range greater than the area of the vent plate 330. The second open hole 510 may be designed to have any of various shapes, such as an oval shape, a circular shape, a polygonal shape, and the like in addition to the rectangular shape shown in FIG. 13.

The secondary battery 20 according to an embodiment may further include a wing member 520.

The wing member 520 may extend from the second insulating member 500 and may be disposed to face the side surface portion 230.

A pair of wing members 520 according to an embodiment may be provided. The pair of wing members 520 may extend from both, or opposite, end portions of the second insulating member 500 along the second direction in the direction parallel to the third direction. An inner side surface of the wing member 520 may be disposed to face the side surface portion 230 of the case 200 along the second direction. The inner side surface of the wing member 520 may be attached to the side surface portion 230 and the side surface insulating portion 403 by an adhesive. Accordingly, as the wing member 520 strengthens the bonding strength between the second insulating member 500 and the cap plate 300, the second insulating member 500 may be prevented or substantially prevented from being lifted.

An end portion of the wing member 520 may be disposed to cover a portion of the upper end portion of the side surface hole 411. Accordingly, the wing member 520 may prevent or substantially prevent a bonding portion between the side surface portion 230 and the cap plate 300 from being directly exposed to the outside.

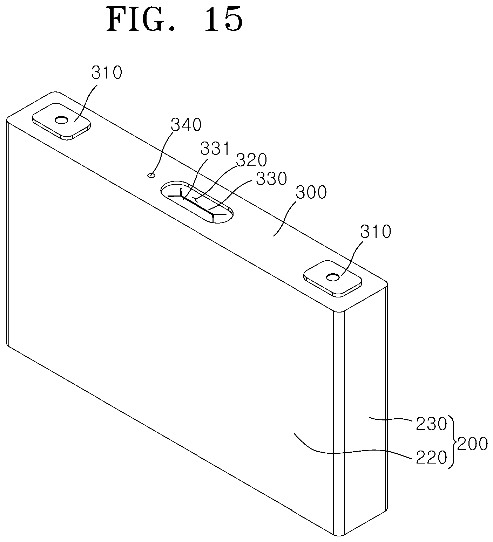

FIGS. 15 to 17 are views schematically illustrating a manufacturing process of the secondary battery according to an embodiment of the present disclosure.

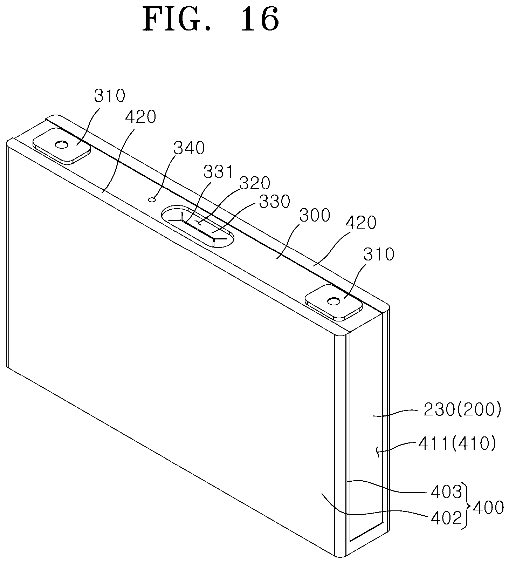

Referring to FIGS. 15 and 16, first, in a state in which the cap plate 300 is coupled to the case 200, the outer side surface of the case 200 is insulated by the first insulating member 400.

In an embodiment, the bottom insulating portion 401, the rear surface insulating portion 402, and the side surface insulating portion 403 of the first insulating member 400 are disposed to respectively face the bottom portion 210, the rear surface portion 220, and the side surface portion 230 of the case 200.

In an embodiment, the inner side surfaces of the bottom insulating portion 401, the rear surface insulating portion 402, and the side surface insulating portion 403 of the first insulating member 400 may be attached to the outer side surfaces of the bottom portion 210, the rear surface portion 220, and the side surface portion 230 of the case 200 by an adhesive.

As the side surface insulating portion 403 is disposed to face the side surface portion 230, a portion of the side surface portion 230 may be exposed to the outside by the side surface hole 411 passing through the side surface insulating portion 403.

Then, the extending insulating portion 420 extending from the upper end portion of the rear surface insulating portion 402 is bent toward the cap plate 300.

The inner side surface of the extending insulating portion 420 may be disposed to face the outer side surface of the cap plate 300, and the inner side surface of the extending insulating portion 420 may be attached to the outer side surface of the cap plate 300 by an adhesive.

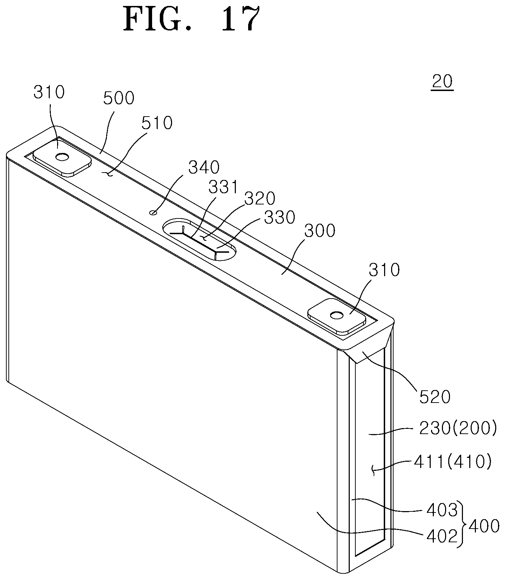

Referring to FIG. 17, after the extending insulating portion 420 is attached to the cap plate 300, the second insulating member 500 is seated on the cap plate 300.

The inner side surface of the second insulating member 500 may be attached to the outer side surface of the cap plate 300 and the extending insulating portion 420 by an adhesive.

The terminal 310 and the vent plate 330 may be exposed to the outside through the second open hole 510 passing through the second insulating member 500.

Then, the wing members 520 extending from both, or opposite, end portions of the second insulating member 500 are bent toward the side surface portion 230.

The inner side surfaces of the wing members 520 are disposed to face the outer side surfaces of the side surface portion 230 and the side surface insulating portion 403, and the inner side surfaces of the wing members 520 are attached to the outer side surfaces of the side surface portion 230 and the side surface insulating portion 403 by an adhesive or the like.

The adhesive member 30 may be disposed between the housing 10 and the secondary battery 20. The adhesive member 30 may bond the housing 10 and the secondary battery 20 to each other. Accordingly, the adhesive member 30 may prevent or substantially prevent the secondary battery 20 from moving in the housing 10, such as due to a clearance or the like, and may prevent or substantially prevent damage to the secondary battery 20 due to an external impact or the like.

The adhesive member 30 according to an embodiment may include a polymeric material having adhesive and insulating properties, such as epoxy, urethane, or the like. The adhesive member 30 may be applied on an inner side surface of the housing body 11 facing an outer side surface of the secondary battery 20. For example, a portion of the adhesive member 30 may be applied on an inner side surface of the side plate 11c. The adhesive member 30 applied on the side plate 11c may be disposed to face the side surface portion 230 of the secondary battery 20.

The adhesive member 30 may be in direct contact with the case 200 through the first open hole 410. For example, the adhesive member 30 facing the side surface portion 230 of the secondary battery 20 may be in direct contact with a surface of the side surface portion 230 through the side surface hole 411. Accordingly, as the secondary battery 20 and the housing body 11 are directly bonded by the adhesive member 30 in a region where the side surface hole 411 is formed, a battery pack according to an embodiment may enhance the bonding strength between the secondary battery 20 and the housing body 11.

FIG. 2 illustrates an example in which the adhesive member 30 is applied only on the inner side surface of the side plate 11c, but the adhesive member 30 is not limited thereto, and may also be applied on an inner side surface of the bottom plate 11a and an inner side surface of the end plate 11b.

Herein, a battery pack according to another embodiment of the present disclosure will be described.

The battery pack according to the present embodiment may be configured to differ from the battery pack according to the previously described embodiment of the present disclosure in terms of a configuration of the secondary battery 20.

Accordingly, in the description of the battery pack according to the present embodiment, only the detailed configuration of the secondary battery 20 which is different from the battery pack according to the previously described embodiment of the present disclosure will be described.

The description of the battery pack according to the previously described embodiment of the present disclosure may be applied as is to remaining configurations of the battery pack according to the present embodiment.

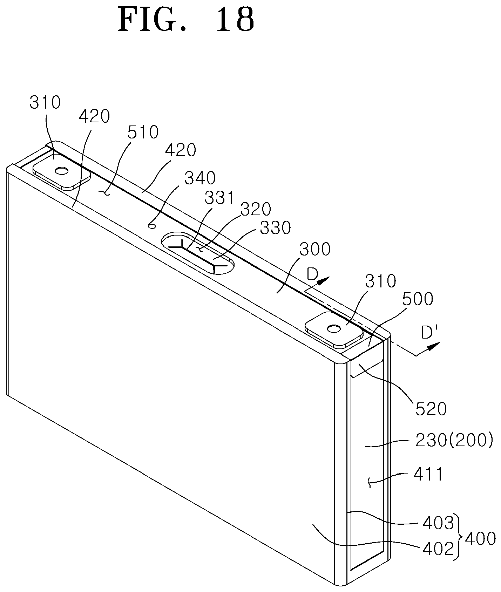

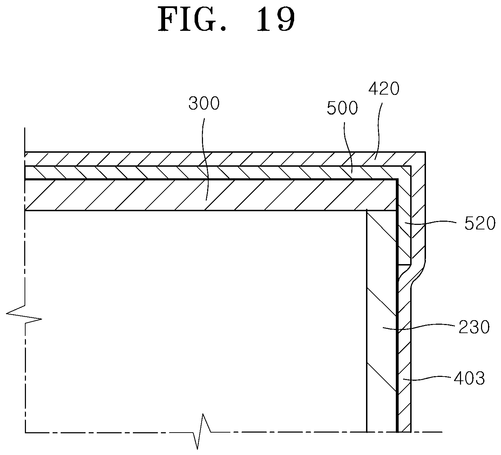

FIG. 18 is a perspective view schematically illustrating a configuration of a secondary battery according to the present embodiment of the present disclosure; and FIG. 19 is a cross-sectional view taken along the line D-D' in FIG. 18.

Referring to FIGS. 18 and 19, a second insulating member 500 according to the present embodiment may be disposed between an extending insulating portion 420 and a cap plate 300. The extending insulating portion 420 may be disposed to cover an outer side surface edge of the second insulating member 500. Accordingly, the second insulating member 500 may be fixed on the cap plate 300 by the extending insulating portion 420 without a separate adhesive, and an overall height of a secondary battery 20 may be decreased by omitting the adhesive.

A wing member 520 according to an embodiment may be disposed between a side surface portion 230 and a side surface insulating portion 403. The side surface insulating portion 403 may be disposed to cover an outer side surface edge of the wing member 520. Accordingly, the side surface insulating portion 403 may prevent or substantially prevent the wing member 520 from being lifted from the side surface portion 230.

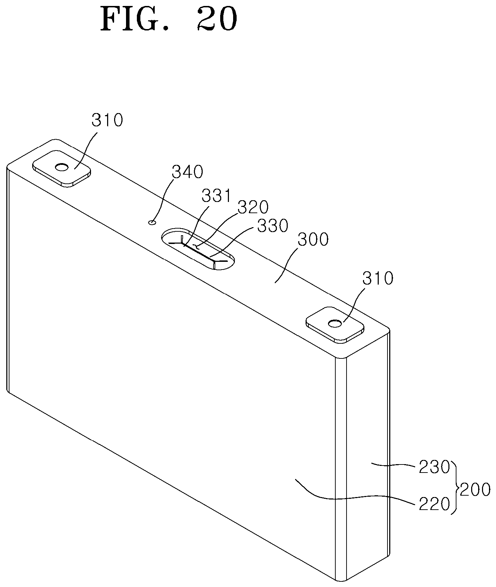

FIGS. 20 to 22 are views schematically illustrating a manufacturing process of the secondary battery of FIG. 18.

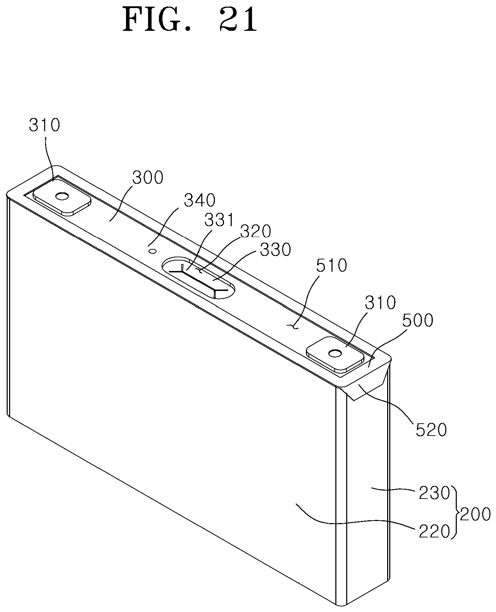

Referring to FIGS. 20 and 21, first, in a state in which the cap plate 300 is coupled to the case 200, the second insulating member 500 is seated on the cap plate 300.

In an embodiment, an inner side surface of the second insulating member 500 may be in contact with an outer side surface of the cap plate 300 without a separate adhesive. In an embodiment, the inner side surface of the second insulating member 500 may be attached to the outer side surface of the cap plate 300 by an adhesive.

A terminal 310 and a vent plate 330 may be exposed to the outside through a second open hole 510 passing through the second insulating member 500.

Then, the wing members 520 extending from both, or opposite, end portions of the second insulating member 500 are bent toward the side surface portion 230.

An inner side surface of the wing member 520 may be disposed to face the outer side surface of the side surface portion 230. In an embodiment, the inner side surface of the wing member 520 may be in contact with the outer side surface of the side surface portion 230 without a separate adhesive. In an embodiment, the inner side surface of the wing member 520 may be attached to the outer side surface of the side surface portion 230 by an adhesive.

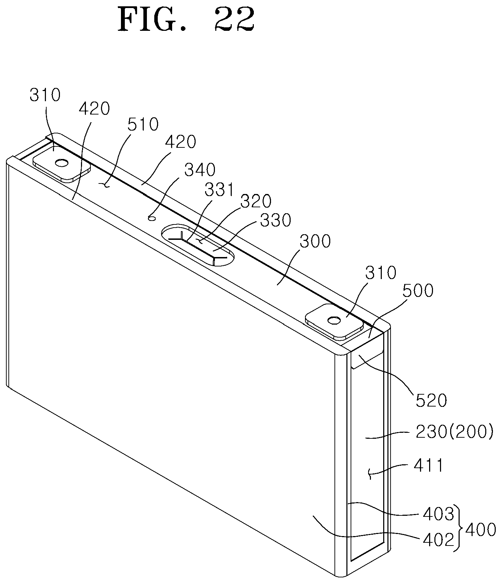

Referring to FIG. 22, after the second insulating member 500 and the wing member 520 are respectively seated on the cap plate 300 and the side surface portion 230, an outer side surface of the case 200 is insulated by a first insulating member 400.

In an embodiment, a bottom insulating portion 401, a rear surface insulating portion 402, and a side surface insulating portion 403 of the first insulating member 400 are disposed to respectively face a bottom portion 210, a rear surface portion 220, and the side surface portion 230 of the case 200.

Inner side surfaces of the bottom insulating portion 401 and the rear surface insulating portion 402 of the first insulating member 400 may be attached to outer side surfaces of the bottom portion 210 and the rear surface portion 220 of the case 200 by an adhesive.

An inner side surface of the side surface insulating portion 403 of the first insulating member 400 may be attached to outer side surfaces of the side surface portion 230 of the case 200 and the wing member 520 by an adhesive.

As the side surface insulating portion 403 is disposed to face the side surface portion 230, a portion of the side surface portion 230 may be exposed to the outside by a side surface hole 411 passing through the side surface insulating portion 403.

Then, the extending insulating portion 420 extending from an upper end portion of the rear surface insulating portion 402 is bent toward the cap plate 300.

An inner side surface of the extending insulating portion 420 may be disposed to face the outer side surfaces of the cap plate 300 and the second insulating member 500, and the inner side surface of the extending insulating portion 420 may be attached to the outer side surfaces of the cap plate 300 and the second insulating member 500 by an adhesive.

Herein, a battery pack according to another embodiment of the present disclosure will be described.

The battery pack according to the present embodiment may be configured to differ from the battery packs according to the previously described embodiments of the present disclosure in terms of a configuration of the secondary battery 20.

Accordingly, in the description of the battery pack according to the embodiment, only the detailed configuration of the secondary battery 20 which is different from the battery packs according to the first and second embodiments of the present disclosure will be described.

The description of the battery packs according to the first and second embodiments of the present disclosure may be applied as is to the remaining configurations of the battery pack according to the embodiment.

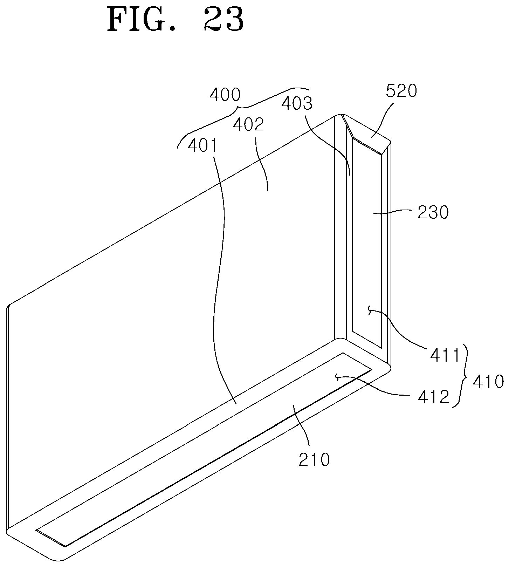

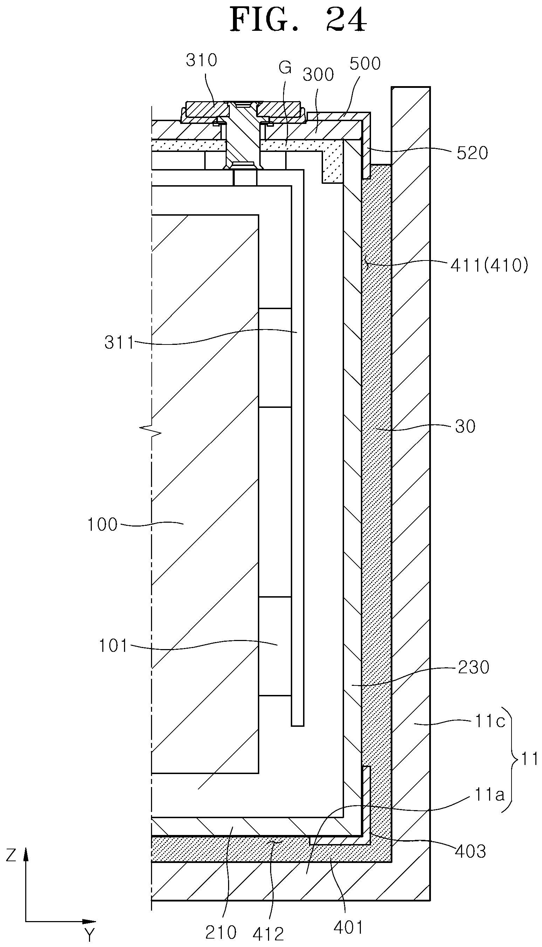

FIG. 23 is a perspective view schematically illustrating a configuration of a secondary battery according to another embodiment of the present disclosure; and FIG. 24 is a view illustrating a state in which the secondary battery of FIG. 23 is installed in a housing.

Herein, as shown in FIGS. 23 and 24, an example in which a second insulating member 500 and a wing member 520 are configured to be respectively disposed on the outer sides of an extending insulating portion 420 and a side surface insulating portion 403 in a secondary battery 20 according to an embodiment, like the secondary battery 20 according to the embodiment of FIG. 1 will be described. However, the secondary battery 20 according to an embodiment is not limited thereto, and the second insulating member 500 and the wing member 520 may be configured to be respectively disposed on the inner sides of the extending insulating portion 420 and the side surface insulating portion 403 like the secondary battery 20 according to the embodiment of FIG. 18.

A first open hole 410 according to the embodiment may further include a bottom hole 412.

The bottom hole 412 may pass through a bottom insulating portion 401 and expose a bottom portion 210 of a case 200.

In an embodiment, a ratio of an area of the bottom hole 412 to an area of the bottom portion 210 may be 0.25 to 0.65. A shape of the bottom hole 412 is not limited to the quadrangular shape shown in FIG. 23, and may be designed to have any of various shapes, such as a triangular shape, a circular shape, an oval shape, a rhombus shape, and the like.

A portion of an adhesive member 30 according to an embodiment may be applied on an inner side surface of a side plate 11c, and another portion of the adhesive member 30 may be applied on an inner side surface of a bottom plate 11a.

The adhesive member 30 applied on the side plate 11c may be disposed to face a side surface portion 230 of the secondary battery 20. The adhesive member 30 facing the side surface portion 230 of the secondary battery 20 may be in direct contact with a surface of the side surface portion 230 through a side surface hole 411.

The adhesive member 30 applied on the bottom plate 11a may be disposed to face the bottom portion 210 of the secondary battery 20. The adhesive member 30 facing the bottom portion 210 of the secondary battery 20 may be in direct contact with a surface of the bottom portion 210 through the bottom hole 412.

Accordingly, the battery pack according to an embodiment may enhance the bonding strength between the secondary battery 20 and the housing body 11 by increasing a number of points where the secondary battery 20 and the housing body 11 are directly bonded by the adhesive member 30.

Herein, a battery pack according to another embodiment of the present disclosure will be described.

The battery pack according to the present embodiment may be configured to differ from the battery packs according to the previously described embodiments of the present disclosure in terms of a configuration of the secondary battery 20.

Accordingly, in the description of the battery pack according to the present embodiment, a detailed configuration of the secondary battery 20 which is different from the battery packs according to the previously described embodiments of the present disclosure will be described.

The description of the battery packs according to the previously described embodiments of the present disclosure may be applied as is to the remaining configurations of the battery pack according to the present embodiment.

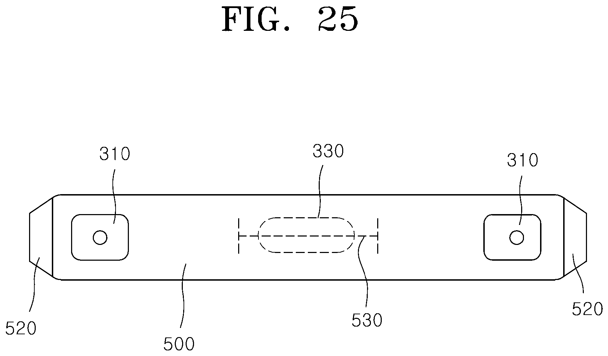

FIG. 25 is a plan view schematically illustrating a configuration of a second insulating member according to another embodiment of the present disclosure.

Referring to FIG. 25, in a secondary battery 20 according to the present embodiment, a second open hole 510 may not be formed in a second insulating member 500. That is, the second insulating member 500 may be formed such that all surfaces facing a cap plate 300 are closed. Accordingly, the second insulating member 500 may block serial ignition of the secondary batteries 20 by preventing or substantially preventing flames, gas, or the like from entering a vent plate 330 of any one secondary battery 20 if the vent plate 330 of an adjacent secondary battery 20 is opened.

The secondary battery 20 according to an embodiment may further include a break line 530.

The break line 530 may cause a partial region of the second insulating member 500 disposed to face the vent plate 330 to break if the vent plate 330 is opened.

The break line 530 according to an embodiment may be formed to have a notch shape concavely recessed from a surface of the second insulating member 500 or a slit shape passing through the second insulating member 500. The break line 530 may be disposed to face the vent plate 330. However, a shape of the break line 530 is not limited to the shape shown in FIG. 25, and may have any of various shapes capable of breaking the partial region of the second insulating member 500 disposed to face the vent plate 330 if the vent plate 330 is opened.

According to embodiments of the present disclosure, the insulating performance of a secondary battery can be secured by forming an insulating member having an insulating property on the outside of the secondary battery.

According to embodiments of the present disclosure, the bonding strength between a case of the secondary battery and a housing of the battery pack by an adhesive member can be further strengthened by opening a partial region of the insulating member surrounding the outside of the secondary battery.

According to embodiments of the present disclosure, the efficiency of a taping process can be further enhanced by dividing the insulating member surrounding the outside of the secondary battery into a first insulating member and a second insulating member.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

Therefore, the technical scope of the present disclosure should be defined by the claims.

## Claims

1. A secondary battery (20) comprising:
an electrode (100) assembly;
a case (200) comprising: a bottom portion (210); a rear surface portion (220) extending from the bottom portion (210); and a side surface portion (230) extending from the bottom portion (210) and intersecting the rear surface portion (220); and the case (200) accommodating the electrode assembly (100);
a cap plate (300) coupled to the case (200);
a first insulating member (400) around an outer side surface of the case; and
a first open hole (410) passing through the first insulating member (400) and exposing the outer side surface of the case (200).

2. The secondary battery as claimed in claim 1, wherein an area of the side surface portion (230) is smaller than an area of the rear surface portion (220).

3. The secondary battery as claimed in one of claims 1 or 2, wherein
the first insulating member (400) comprises: a bottom insulating portion (401) facing the bottom portion (210); a rear surface insulating portion (402) facing the rear surface portion (220); and a side surface insulating portion (403) facing the side surface portion (230), and
the first open hole (410) comprises a side surface hole (411) passing through the side surface insulating portion (403).

4. The secondary battery as claimed in claim 3, wherein a ratio of an area of the side surface hole (411) to the area of the side surface portion (230) is 0.25 to 0.65.

5. The secondary battery as claimed in one of claims 3 or **4,** wherein the side surface hole (411) comprises a plurality of unit side surface holes (411a) spaced apart from each other on the side surface portion (230).

6. The secondary battery as claimed in one of claims 3 to 5, wherein the first open hole (410) further comprises a bottom hole (412) passing through the bottom insulating portion (401).

7. The secondary battery as claimed in one of the preceding claims, further comprising a second insulating member (500) covering an outer side surface of the cap plate (300).

8. The secondary battery as claimed in claim 7, wherein a thickness of the second insulating member (500) is greater than a thickness of the first insulating member (400).

9. The secondary battery as claimed in one of claims 7 or 8, further comprising a wing member (520) extending from the second insulating member (500) and facing the side surface portion (230).

10. The secondary battery as claimed in claim 9, wherein the wing member (520) comprises a pair of wing members symmetrically arranged at opposite sides of the second insulating member (500).

11. The secondary battery as claimed in one of claims 9 or 10, wherein the wing member (520) is between the side surface portion (230) and the side surface insulating portion (403).

12. The secondary battery as claimed in one of claims 7 to 9, further comprising an extending insulating portion (420) extending from the first insulating member (400) and facing the cap plate (300).

13. The secondary battery as claimed in claim 12, wherein the extending insulating portion (420) is between the second insulating member (500) and the cap plate (300).

14. The secondary battery as claimed in one of claims 7 to 13, further comprising a second open hole (510) passing through the second insulating member (500) and exposing the outer side surface of the cap plate (300).

15. A battery module comprising:
a housing (10);
one or more secondary batteries (20) accommodated in the housing (10); and
an adhesive member (30) between the housing (10) and a secondary battery (20) of the one or more secondary batteries,
wherein the secondary battery (20) comprises: an electrode assembly (100); a case (200) comprising: a bottom portion (210); a rear surface portion (220) extending from the bottom portion (210); and a side surface portion (230) extending from the bottom portion (210) and intersecting the rear surface portion (220); and the case (200) accommodating the electrode assembly (100); a cap plate (300) coupled to the case (200); a first insulating member (400) around an outer side surface of the case; and a first open hole (410) passing through the first insulating member (400) and exposing the outer side surface of the case (200), and
the adhesive member (30) is in contact with the case (200) through the first open hole (410).
